# EUROPEAN PATENT SPECIFICATION

(11) **EP 3 163 261 B1**
(45) Date of publication and mention of the grant of the patent: **01.04.2020**
(21) Application number: 15812478.4
(22) Date of filing: 25.02.2015
(51) Int. Cl.: G01F 1/115, G01F 5/00

(54) **FLOW SENSOR**
DURCHFLUSSSENSOR
CAPTEUR DE DEBIT

(30) Priority: 27.06.2014 JP 2014133286
(43) Date of publication of application: 03.05.2017
(73) Proprietor: Saginomiya Seisakusho, Inc., Tokyo 165-0033 (JP)
(72) Inventor: KODAMA Satoshi, Tokorozawa-shi Saitama 359-1105 (JP)
(74) Representative: Hoffmann Eitle
(86) International application number: PCT/JP2015/055363
(87) International publication number: WO 2015/198633

(56) References cited:
- WO-A1-98/41819
- DE-A1- 10 111 993
- DE-A1-102009 060 516
- DE-A1-102011 110 023
- GB-A- 984 941
- JP-A- S5 984 115
- JP-U- H0 687 820
- US-B1- 6 272 920

## Description

### [Technical Field]

The invention relates to a flow sensor to measure the flowing quantity of the fluid which is flowed in piping.

For instance, the invention relates to the flow sensor to measure the flowing quantity of the fluid of the liquid such as an instantaneous hot-water heater, a boiler, facilities of supplying hot water, and electric water heaters.

### [Background Art]

Conventionally, as for a flow sensor to measure the flowing quantity of such a fluid, a flow sensor of the type that generates the pulse signal corresponding to the detection flowing quantity is developed.

For instance, besides this flow sensor is used for such as the feedforward control of the instantaneous water heater and the ignition control of the burner, it is widely used as the sensor for the detection of the integrated flow rate to the bathtub and the remaining hot water amounts of the boilers.

As for a flow sensor to measure the flowing quantity of such a fluid, there is a flow sensor having structure disclosed in JP 2001-255183 A.

Fig. 10 is a longitudinal sectional view of the conventional flow sensor disclosed in JP 2001-255183 A.

Fig. 11 is an end view in the direction of A of the flow sensor of Fig. 10.

Fig. 12 is a partial enlarged sectional view of Fig. 10.

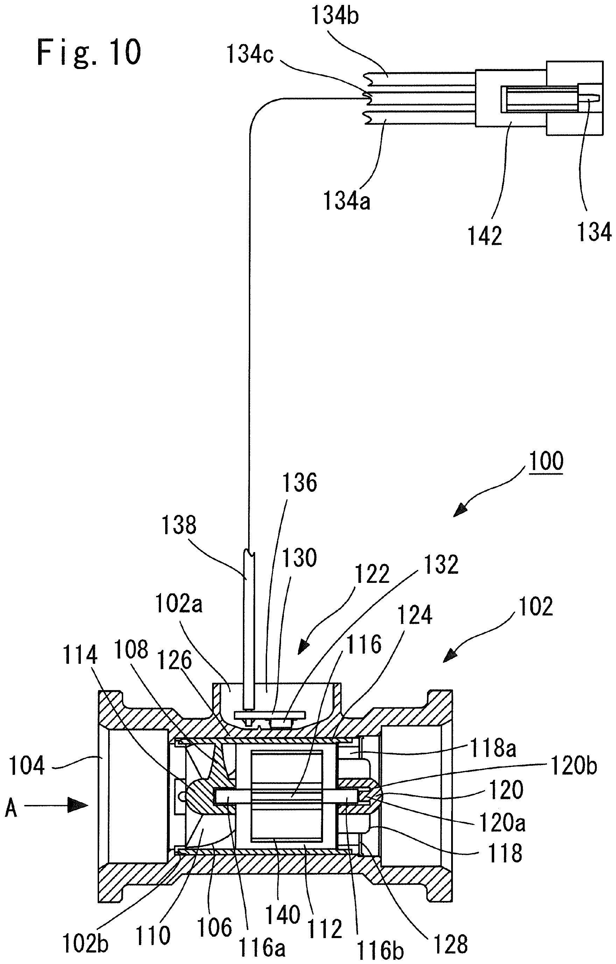

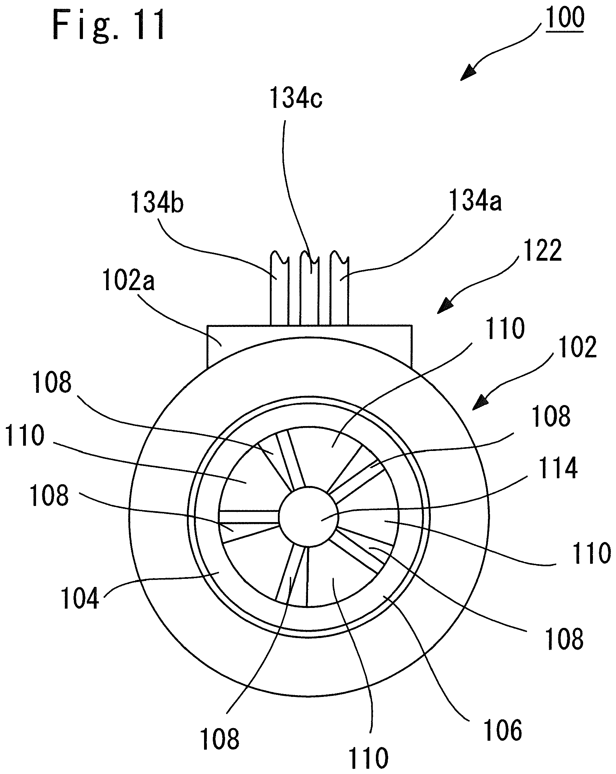

This conventional flow sensor 100, as shown in Fig. 10 and Fig. 11, includes a flow sensor main body 102 having the substantially circular tube shape.

In an entrance 104 on the upstream side of this flow sensor main body 102, a fixed vortex flow generating blade member 106 which generates the vortex flow is provided.

Moreover, as shown in Fig. 10 and Fig. 11, the vortex flow generating blade member 106 includes a plurality of blade members 108 (5 blade members) formed like the spiral.

In addition, between a plurality of the blade members 108 formed like this, five vortex flow generating introducing path 110 are formed like the spiral.

Moreover, on the downstream of the vortex flow generating blade member 106, a flow measurement rotating blade member 112, which is rotated by the vortex flow generated by passing through the vortex flow generating introducing path 110 of the vortex flow generating blade member 106, is rotatably provided.

That is, a bearing 114 is formed on the center of the vortex flow generating blade member 106.

In addition, one edge 116a of a shaft portion 116 of the flow measurement rotating blade member 112 is provided to this bearing 114.

In addition, on the downstream of this flow measurement rotating blade member 112, an outlet member 118, to exhaust the fluid which is passed through this flow measurement rotating blade member 112, is provided.

A plurality of outlets 118a to exhaust the fluid is formed on this outlet member 118.

Moreover, a bearing 120 is formed on the center of this outlet member 118.

In addition, the other edge 116b of the shaft portion 116 of the flow measurement rotating blade member 112 is provided to this bearing 120.

By composing like this, by being pivoted by the bearing 114 of the vortex flow generating blade member 106 and the bearing 120 of the outlet member 118, the flow measurement rotating blade member 112 is rotatably provided.

In addition, as shown in Fig. 10 and Fig. 11, as for the flow measurement rotating blade member 112, four blade portions 140, which is formed and spaced mutually by the central angle degree of 90°, is provided.

The tip of these blade portions 140 is magnetized respectively alternately in S pole and N pole.

Moreover, on a recess 102a which is formed on the side of the flow sensor main body 102, a flowing quantity detection portion 122, in which the flow measurement is performed by the rotating of the flow measurement rotating blade member 112, is provided.

In this flow rate detection portion 122, for instance, by hall IC etc., together with the rotation of the flow measurement rotating blade member 112, by change of flux density by magnetized tip of the blade portion 140, or by outputting the change of the field direction as a pulse signal, flowing quantity is measured.

In addition, the vortex flow generating blade member 106 is integrally formed with a casing 124 of the cylindrical shape. These flow measurement rotating blade member 112 and outlet member 118 are integrally contained in the casing 124 of the cylindrical shape, whereby a flow sensor unit 126 is formed.

Moreover, this flow sensor unit 126 is abutted its side of the vortex flow generating blade member 106 to the steps portion 102b on the entrance side which is formed on the flow sensor main body 102.

As a result, the flow sensor unit 126 is disposed in the flow sensor main body 102 by fixing the side of the outlet member 118 with a fixing ring 128.

In the conventional flow sensor 100 composed like this, the fluid introduced from the entrance 104 of the upstream side of the flow sensor main body 102 is passed through the vortex flow generating introducing path 110 of the vortex flow generating blade member 106, so that the vortex flow is generated.

Moreover, by the vortex flow generated like this, the flow measurement rotating blade member 112 is rotated.

In the flow rate detection portion 122, for instance, by hall IC etc., together with the rotation of the flow measurement rotating blade member 112, by change of flux density by magnetized tip of the blade portion 140, or by outputting the change of the field direction as a pulse signal, flowing quantity is measured.

In addition, the fluid which is passed through this flow measurement rotating blade member 112 is exhausted outside through a plurality of the outlet 118a of the outlet member 118.

Specifically, as for the flow rate detection portion 122, a substrate 130 is provided as shown in Fig. 10, and a hall IC 132 is located on this substrate 130.

Moreover, together with the rotation of the flow measurement rotating blade member 112, the change in the field direction by the magnetized tip of the blade portion 140 is detected by the hall IC 132, so that the pulse signal is generated.

That is, direct current normal rated voltage is applied to the hall IC 132 through a terminal 134.

As a result, the voltage of the frequency corresponding to the rotation number (flow rate) of the flow measurement rotating blade member 112 is output through the terminal 134.

In addition, in Fig. 10, the reference numeral 136 shows the sealing resin in which the substrate 130 of the flow rate detection portion 122 and the hall IC 132 etc. are sealed, and the reference numeral 138 shows a lead wire and the reference numeral 142 shows a retrieve housing respectively.

Moreover, as shown in Fig. 10, the terminal 134 is connected with three electric wires of a common line (GND) 134a and an input power source line (Vcc) 134b and an output signal line (Vout) 134c.

Further prior art in this regard is disclosed in JP S59 84115 A, WO 98/41819 A1, DE 10 2011 110023 A1, GB 984 941 A, US 6 272 920 B1, DE 10 2009 060516 A1, and JP H06 87820 U.

### [Summary of Invention]

### [Problems to be Solved by the Invention]

However, in such conventional flow sensor 100, when the large amount of fluid is flowed, the pressure loss is large.

Therefore, in the system, it comes to have to design the first pressure high.

As a result, it is preferable that the pressure loss is small.

Moreover, like this, where the flow rate is increased drastically to measure the large amount of fluid, the rotation number of the flow measurement rotating blade member 112 is increased.

For this, the edge 116b of the shaft portion 116 of the flow measurement rotating blade member 112 is wear-out and damaged at the bearing 120 formed to the outlet member 118.

As a result, life of the product might become short.

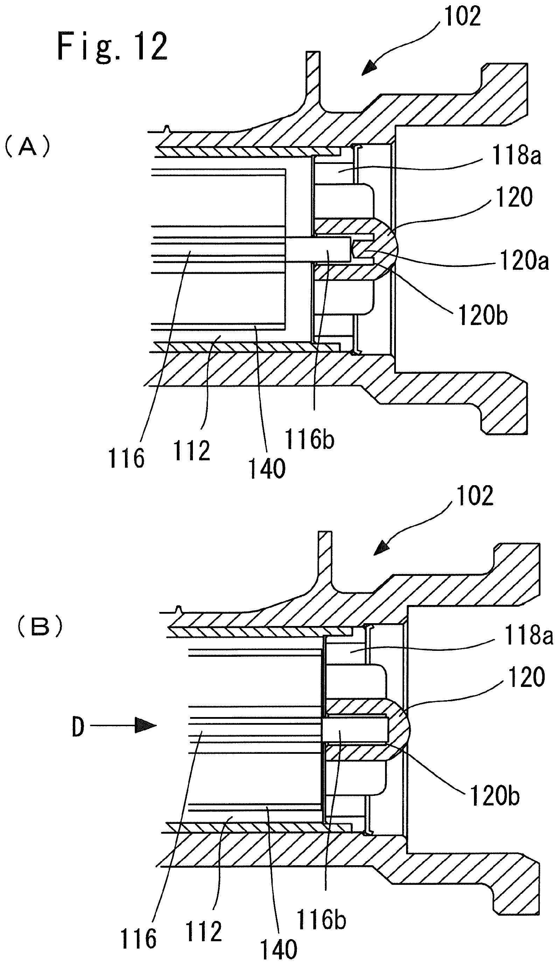

That is, as shown in the enlarged view of Fig. 12 (A), in the bearing 120 formed to the outlet member 118, in order to reduce the contact area with the shaft portion 116 of the flow measurement rotating blade member 112 (i.e. frictional resistance is reduced), a protruded protrusion 120a is formed.

However, where the flow rate is increased drastically as stated above, the rotation number of the flow measurement rotating blade member 112 is increased.

As a result, there is a case that the protrusion 120a is wear-out and damaged by rotating of the flow measurement rotating blade member 112.

As a result, as shown in arrow D of the enlarged view of Fig. 12(B), the edge 116b of the shaft portion 116 of the flow measurement rotating blade member 112 is invaded to the end surface 120b of the bearing 120 formed to the outlet member 118.

Consequently, frictional resistance is increased, an accurate flow rate cannot be measured, and product life is shortened.

The invention considers such a current state and is to provide a flow sensor, in which
in case that the flow rate is increased drastically to measure the large amount of fluid,
the pressure loss is smaller than the conventional pressure sensors, and the heavy load is never applied to the flow sensor.

Moreover, the invention is to provide a flow sensor, in which accurate measurement of the flowmeter can be attained and a long product life is provided.

The invention considers such a current state and is to provide a flow sensor, in which
in case that the flow rate is increased drastically to measure the large amount of fluid,
the pressure loss is smaller than the conventional pressure sensors, and the heavy load is never applied to the flow sensor.

Moreover, the invention is to provide a flow sensor, in which for instance, the wear-out damage is not caused in the bearing of the flow measurement rotating blade member, accurate measurement of the flowmeter can be attained and a long product life is provided.

Moreover, the invention is to provide a flow sensor, in which it is applicable in various ranges of the use flow rate and the flow characteristics.

In addition, the invention is to provide a flow sensor, in which parts of the conventional and existing flow sensor can be used as it is, and
in which the expense required for the design variation and the die, etc. can be reduced, and the cost can be reduced.

### [Solution to Problem]

The invention was invented to attain the problem and the purpose in the above-mentioned prior art,
the flow sensor of the invention being a flow sensor as set out in present independent claim 1.

By component like this, a part of the fluid, which flows in the flow sensor piping main body, flows in the bypass flow path that is located on the flow sensor piping main body in the direction of the fluid flow.

As a result, the flow rate of the fluid flowing in the flow sensor main body is reduced among the fluids which flow in the flow sensor piping main body.

Therefore, when the large amount of fluid is measured, the pressure loss becomes small compared with the conventional pressure sensor.

Moreover, in case that the flow rate is increased drastically, the heavy load is never applied to the flow sensor main body.

In addition, a flow sensor, in which the flow sensor main body is never worn-out and damaged and in which accurate measurement of the flowmeter can be attained and a long product life is provided, can be provided.

Furthermore, it is applicable in various ranges of the use flow rate and flow characteristics according to changing the caliber and the shape of the bypass flow path.

By component as set out in independent claim 1, a part of the fluid, which flows in the flow sensor piping main body, flows in the bypass flow path that is located on the flow sensor piping main body in the direction of the fluid flow.

As a result, the flow rate of the fluid flowing in the flow sensor main body is reduced among the fluids which flow in the flow sensor piping main body.

Therefore, when the large amount of fluid is measured, the pressure loss becomes small compared with the conventional pressure sensor.

Moreover, in case that the flow rate is increased drastically, the heavy load is never applied to the flow sensor main body.

Furthermore, the rotation number of the flow measurement rotating blade member is not increased.

Therefore, the wear-out and damage is not caused in the bearing of the flow measurement rotating blade member.

As a result, the flow sensor, in which accurate measurement of the flowmeter can be attained and a long product life is provided, can be provided.

Furthermore, it is applicable in various ranges of the use flow rate and flow characteristics according to changing the caliber and the shape of the bypass flow path.

In addition, the invention is to provide a flow sensor, in which parts of the conventional and existing flow sensor can be used as it is, and
in which the expense required for the design variation and the die, etc. can be reduced, and the cost can be reduced.

Moreover, the flow sensor of the invention is characterized in that the bypass flow path comprises a plurality of the bypass flow paths.

Like this, the bypass flow path comprises a plurality of the bypass flow path.

Consequently, it is applicable in various ranges of the use flow rate and flow characteristics.

Moreover, the flow sensor of the invention is characterized in that,
the flow sensor main body is located to the center of the cross section of the flow sensor piping main body, and
the plurality of bypass flow paths are located intervally in the predetermined space to the periphery of the flow sensor main body.

Like this, the flow sensor main body is located to the center of the cross section of the flow sensor piping main body, and
the plurality of bypass flow paths are located intervally in the predetermined space to the periphery of the flow sensor main body.

As a result, the pressure loss of the fluid that flows in the flow sensor main body can be reduced.

In addition, the conventional one can be used as a flow sensor main body and, for instance, the pass breakdown test etc. can be used so that the time of the design can be saved.

Moreover, since the flow sensor piping main body, to which the flow sensor main body accommodating portion and the bypass flow path are formed, may be only prepared, the cost can be reduced.

Moreover, the flow sensor of the invention is characterized in that the bypass flow path is the bypass flow path having the substantially partial ring shape of the cross-sectional shape.

By composing like this, the bypass flow path is the bypass flow path having the substantially partial ring shape of the cross-sectional shape.

Therefore, the outside diameter of the flow sensor piping main body 12 can be reduced even if sectional areas of passage of the bypass flow path 62 are the same, it is possible to make to a small diameter, and it can be assumed a compact design.

### [Advantageous Effects of Invention]

According to the invention, a part of the fluid, which flows in the flow sensor piping main body, flows in the bypass flow path that is located on the flow sensor piping main body in the direction of the fluid flow.

As a result, the flow rate of the fluid flowing in the flow sensor main body is reduced compared to the fluid which flows in the flow sensor piping main body.

Therefore, when the large amount of fluid is measured, the pressure loss becomes small compared with the conventional pressure sensor.

Moreover, in case that the flow rate is increased drastically, the heavy load is never applied to the flow sensor main body.

In addition, a flow sensor, in which the flow sensor main body is never wear-out and damaged and in which accurate measurement of the flowmeter can be attained and a long product life is provided, can be provided.

Furthermore, it is applicable in various ranges of the use flow rate and flow characteristics according to changing the caliber and the shape of the bypass flow path.

Moreover, in case that the flow rate is increased drastically, the heavy load is never applied to the flow sensor main body.

Furthermore, the rotation number of the flow measurement rotating blade member is not increased.

Therefore, the wear-out and damage is not caused in the bearing of the flow measurement rotating blade member.

As a result, the flow sensor, in which accurate measurement of the flowmeter can be attained and a long product life is provided, can be provided.

Furthermore, it is applicable in various ranges of the use flow rate and flow characteristics according to changing the caliber and the shape of the bypass flow path.

In addition, the invention is to provide a flow sensor, in which parts of the conventional and existing flow sensor can be used as it is, and
in which the expense required for the design variation and the die, etc. can be reduced, and the cost can be reduced.

### [Brief Description of Drawings]

[Fig. 1]

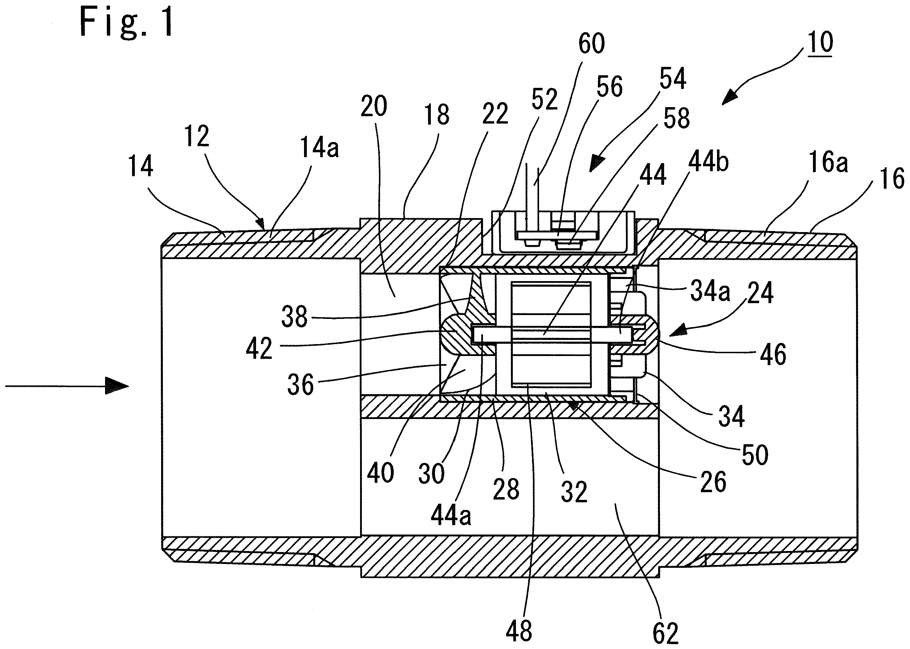

   Fig. 1 is a longitudinal sectional view of the flow sensor 10 of the invention.
[Fig. 2]

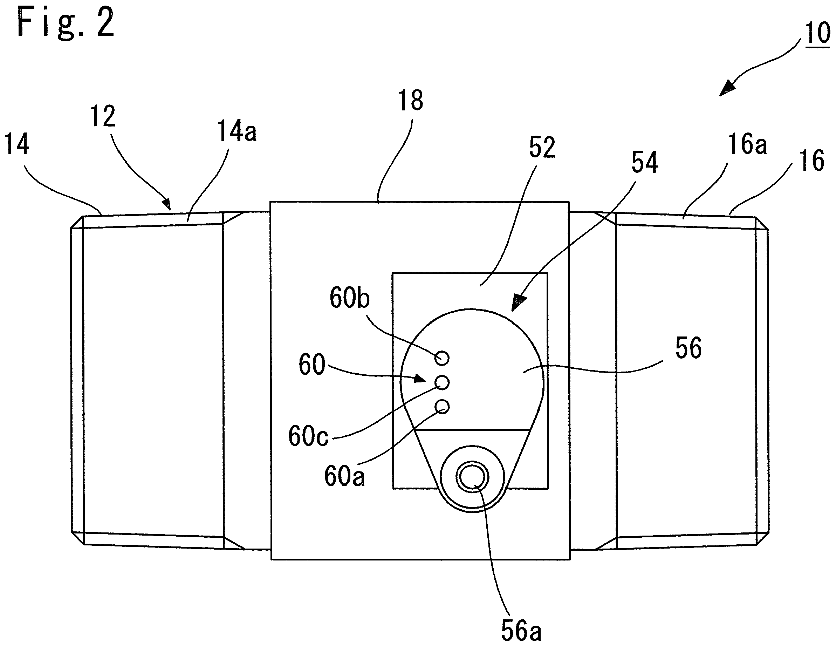

   Fig. 2 is a top view of the flow sensor 10 of Fig. 1.
[Fig. 3]

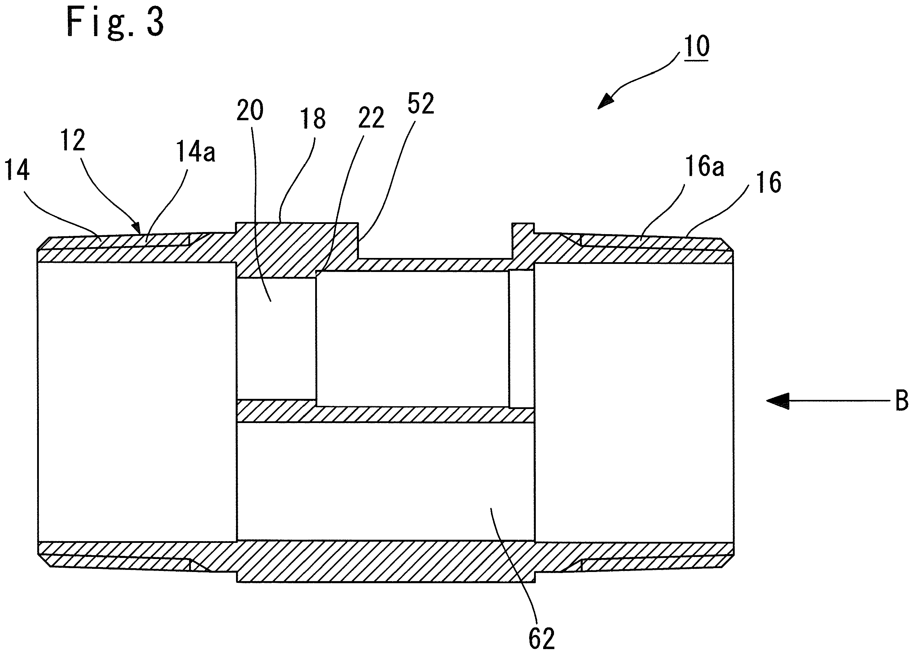

   Fig. 3 is a longitudinal sectional view of the flow sensor piping main body 12 of the flow sensor 10 of Fig. 1.
[Fig. 4]

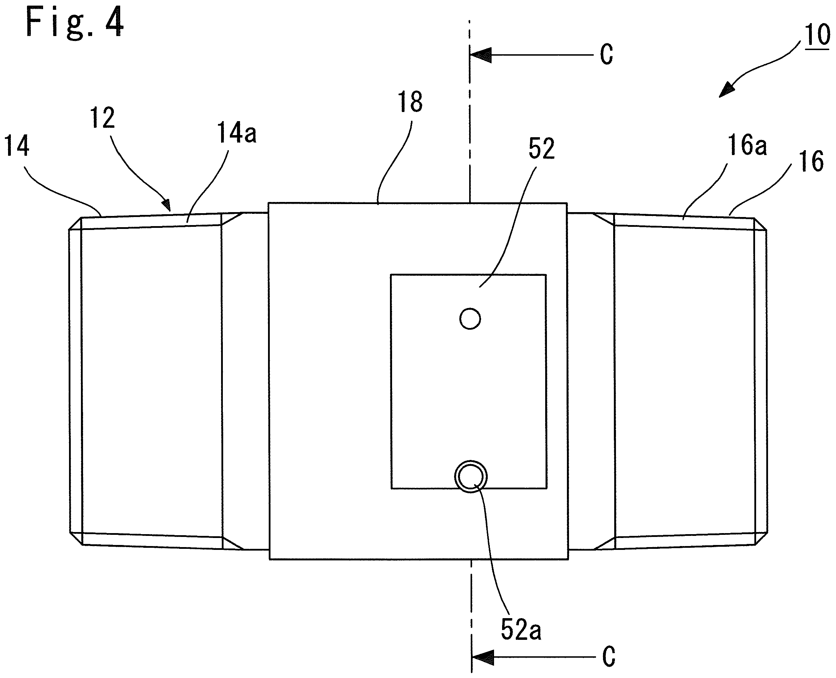

   Fig. 4 is a top view of the flow sensor piping main body 12 of Fig. 3.
[Fig. 5]

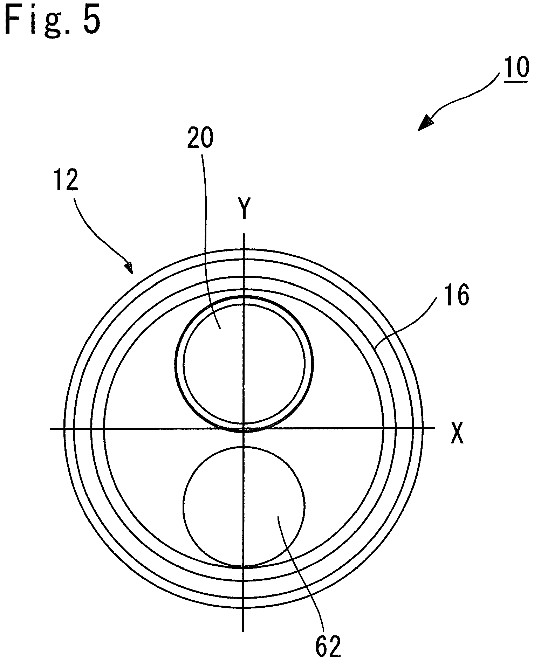

   Fig. 5 is an end view in the direction of B of the flow sensor piping main body 12 of Fig. 3.
[Fig. 6]

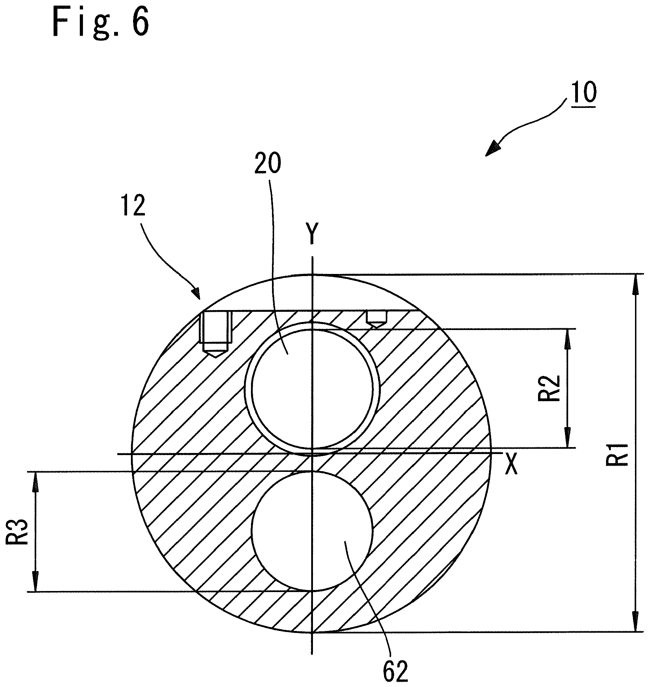

   Fig. 6 is a cross-sectional view in the C-C line of the flow sensor piping main body 12 of Fig. 4.
[Fig. 7]

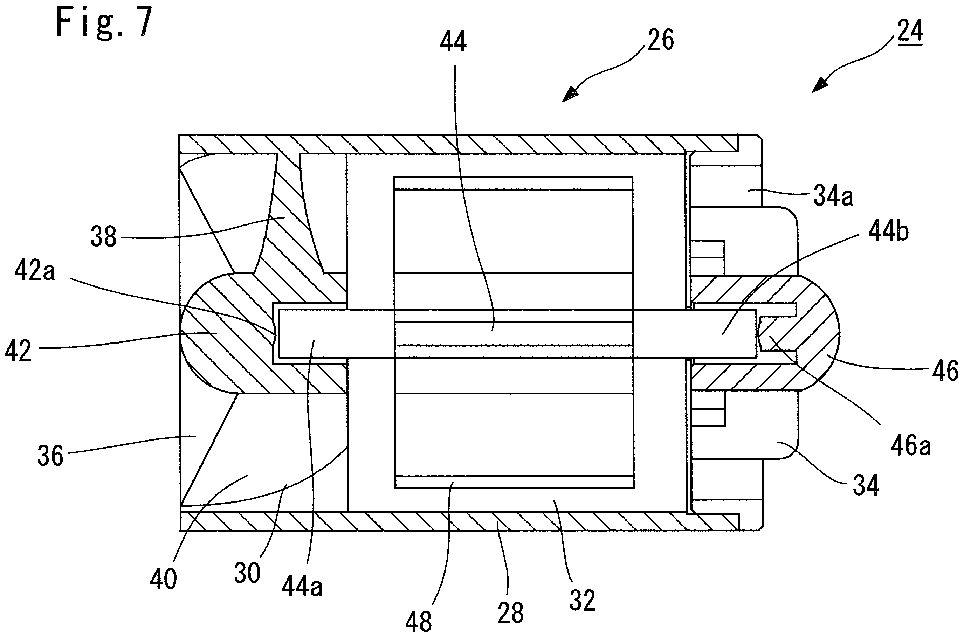

   Fig. 7 is an enlarged sectional view of the flow sensor main body 24 of the flow sensor 10 of the invention.
[Fig. 8]

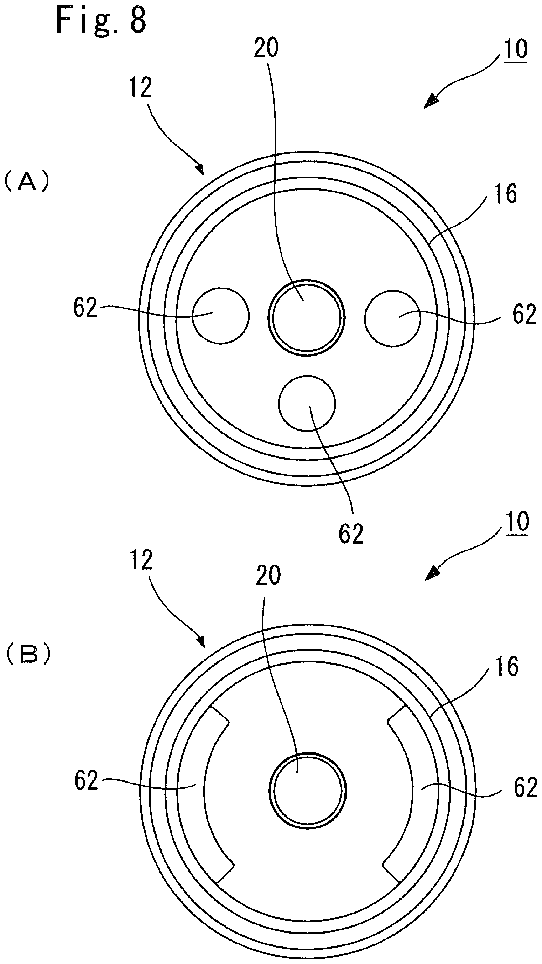

   Fig. 8 is an end view similar to Fig. 5 that shows another Embodiment of the flow sensor 10 of the invention.
[Fig. 9]

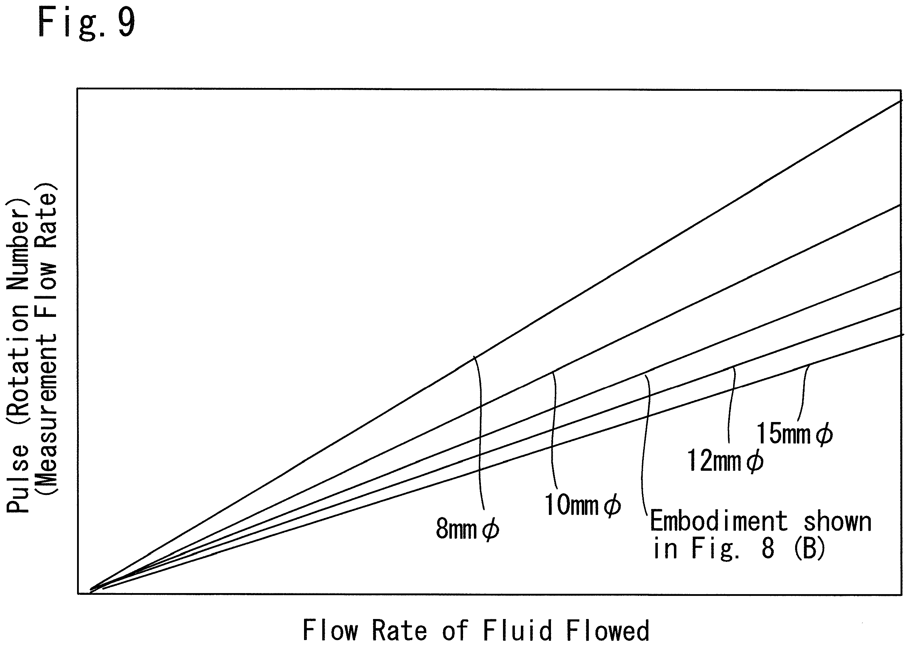

   Fig. 9 is a graph where the relation between the flow rate of the fluid flowed into the flow sensor piping main body 12 of the flow sensor 10 and the pulse (rotation number) detected with the flow sensor 10 of the invention, that is, measurement flow rate is shown.
[Fig. 10]
   Fig. 10 is a longitudinal sectional view of the conventional flow sensor disclosed in JP 2001-255183 A.
[Fig. 11]
   Fig. 11 is an end view in the direction A of the flow sensor of Fig. 10.
[Fig. 12]
   Fig. 12 is a partial enlarged sectional view of Fig. 10.

### [Description of Embodiments]

Hereafter, the embodiment of the invention (Embodiment) is described in the detail or more on the basis of the drawing.

### (Embodiment 1)

In Fig. 1 - Fig. 2, reference numeral 10 shows a flow sensor 10 of the invention in as a whole.

As shown in Fig. 1-Fig. 2, the flow sensor 10 of the invention includes a flow sensor piping main body 12 having the substantially circular tube shape in which the fluid flows.

This flow sensor piping main body 12, as shown in Fig. 1-Fig. 4, includes an entrance side piping portion 14, and an outlet side piping portion 16, and a sensor accommodating portion 18 provided between these entrance side piping portion 14 and outlet side piping portion 16.

Moreover, in the flow sensor 10 of this Embodiment, on the entrance side piping portion 14 and the outlet side piping portion 16 of the flow sensor piping main body 12, a female screw 14a and a female screw 16a are formed to the respective edge for the connection with other connected piping.

In this Embodiment, the female screw 14a and the female screw 16a are formed.

However, it is also possible to form a well-known connecting portion such as flanges for the connection with other connected piping.

As shown in Fig. 1, Fig. 3, and Fig. 5-Fig. 6, inside of the sensor accommodating portion 18 of flow sensor piping main body 12, a flow sensor main body accommodating portion 20 including the through hole having the substantially cylindrical shape is formed in the direction of the fluid flow.

That is, in this Embodiment as shown in Fig. 5-Fig. 6, in the cross section of the sensor accommodating portion 18 of the flow sensor piping main body 12, the flow sensor main body accommodating portion 20 is formed on upper side of central line Y.

Moreover, on the inner periphery wall of this flow sensor main body accommodating portion 20, a step portion 22 is formed on the side of the entrance side piping portion 14.

In addition, as shown in Fig. 1, on this flow sensor main body accommodating portion 20, a flow sensor unit 26 is located in the direction of the fluid flow.

As shown in Fig. 7, the flow sensor main body 26 includes a flow sensor unit 26 having the composition similar to the conventional flow sensor unit 126 shown in Fig. 10.

That is, a vortex flow generating blade member 30 is integrally composed with a casing 28 having the cylindrical shape.

In addition, a flow measurement rotating blade member 32 and an outlet member 34 are integrally contained in the casing 28 having the cylindrical shape.

As a result, the flow sensor unit 26 is composed.

In addition, at an entrance 36 on the upstream side of the casing 28, the fixed vortex flow generating blade member 30 which generates the vortex flow is provided.

Moreover, as shown in Fig. 7, the vortex flow generating blade member 30 includes a plurality of blade members 38 (5 blade members in this Embodiment) formed like the spiral.

Moreover, between a plurality of the blade members 38 formed like this, five vortex flow generating introducing path 40 are formed like the spiral.

Moreover, on the downstream of the vortex flow generating blade member 30, a flow measurement rotating blade member 32, which is rotated by the vortex flow generated by passing through the vortex flow generating introducing path 40 of the vortex flow generating blade member 30, is rotatably provided.

That is, a bearing 42 is formed on the center of the vortex flow generating blade member 30.

In addition, one edge 44a of a shaft portion 44 of the flow measurement rotating blade member 32 is provided to this bearing 42.

In addition, on the downstream of this flow measurement rotating blade member 32, an outlet member 34, to exhaust the fluid which is passed through this flow measurement rotating blade member 32, is provided.

A plurality of outlets 34a to exhaust the fluid is formed on this outlet member 34.

Moreover, a bearing 46 is formed on the center of this outlet member 34.

In addition, the other edge 44b of the shaft portion 44 of the flow measurement rotating blade member 32 is provided to this bearing 46.

By composing like this, by being pivoted by the bearing 42 of the vortex flow generating blade member 30 and the bearing 46 of the outlet member 34, the flow measurement rotating blade member 32 is rotatably provided.

In addition, as shown in Fig. 7, as for the flow measurement rotating blade member 32, four blade portions 48, which is formed and spaced mutually by the central angle degree of 90°, is provided.

The tip of these blade portions 48 is magnetized respectively alternately in S pole and N pole.

I n addition, as shown Fig. 1, in this flow sensor unit 26, the side of the vortex flow generating blade member 30 is abutted to the step portion 22 formed on the inner periphery wall of the flow sensor main body accommodating portion 20.

Thereafter, by fixing the side of the outlet member 34 with a fixing ring 50, the flow sensor unit 26 is disposed in the flow sensor main body accommodating portion 20.

On the other hand, as shown in Fig. 1-Fig. 4 and Fig. 6, on the peripheral side of the sensor accommodating portion 18 of the flow sensor piping main body 12, a recess 52 having rectangular shape is formed.

On the recess 52, a flowing quantity detection portion 54, in which the flow measurement is performed by the rotating of the flow measurement rotating blade member 32, is provided.

In the flow rate detection portion 54, for instance, by hall IC etc., together with the rotation of the flow measurement rotating blade member 32, by change of flux density by magnetized tip of the blade portion 48, or by outputting the change of the field direction as a pulse signal, flowing quantity is measured.

Specifically, as for the flow rate detection portion 54, a substrate 56 is provided as shown in Fig.1 - Fig.2, and a hall IC 58 is located on this substrate 56.

Moreover, together with the rotation of the flow measurement rotating blade member 32, the change in the field direction by the magnetized tip of the blade portion 48 is detected by the hall IC 58 and the pulse signal is generated.

That is, direct current normal rated voltage is applied to the hall IC 58 through a terminal 60.

As a result, the voltage of the frequency corresponding to the rotation number (flow rate) of the flow measurement rotating blade member 32 is output through the terminal 60.

Moreover, as shown in Fig. 2, the terminal 60 is connected with three electric wires of a common line (GND) 60a and an input power source line (Vcc) 60b and an output signal line (Vout) 60c.

Moreover, as shown in Fig. 1, Fig. 2, and Fig. 6, the substrate 56 is fixed to a threaded hole 52a formed on the recess 52 with a stop screw 56a.

On the other hand, as shown in Fig. 1, Fig. 3, and Fig. 5-Fig. 6, inside of the sensor accommodating portion 18 of the flow sensor piping main body 12, besides the flow sensor main body accommodating portion 20, a bypass flow path 62 including the through hole having the substantially cylindrical shape is formed in the direction of the fluid flow.

As for this Embodiment, as shown in Fig. 5 and Fig. 6, in the cross section of the sensor accommodating portion 18 of the flow sensor piping main body 12, one bypass flow path 62 is formed on the lower side of central line Y so as to become the position of the line symmetry about flow sensor main body accommodating portion 20 and central line X.

In this case, the relation among outside diameter R1 of the sensor accommodating portion 18 of the flow sensor piping main body 12, inside diameter R2 of the flow sensor main body accommodating portion 20, and inside diameter R3 of the bypass flow path 62 is not especially limited.

It may be set appropriately according to directing range of the use flow rate and flow characteristic.

Moreover, in the cross section of the sensor accommodating portion 18 of the flow sensor piping main body 12, as for position and disposition of the flow sensor main body accommodating portion 20 and the bypass flow path 62, and cross-sectional shape, number, and position and disposition, etc. of the bypass flow path 62, they may be set appropriately according to directing range of the use flow rate and flow characteristic.

For instance, the bypass flow path 62 may comprises a plurality of bypass flow paths as shown in Fig. 8.

Like this, the bypass flow path 62 comprises a plurality of the bypass flow paths.

Consequently, it is applicable in various ranges of the use flow rate and flow characteristics.

That is, in Fig. 8, the flow sensor main body 24 is located to the center of the cross section of the flow sensor piping main body 12.

In addition, the plurality of bypass flow paths 62 are located intervally in the predetermined space to the periphery of the flow sensor main body 24.

Like this, the flow sensor main body 24 is located to the center of the cross section of the flow sensor piping main body 12, and the plurality of bypass flow paths 62 are located intervally in the predetermined space to the periphery of the flow sensor main body 24.

As a result, the pressure loss of the fluid that flows in the flow sensor main body 24 can be reduced.

Consequently, accurate measurement of the flowmeter can be attained.

For instance, in the Embodiment of Fig. 8 (A), the flow sensor main body 24 is located to the center of the cross section of the flow sensor piping main body 12.

In addition, three bypass flow paths 62 are located intervally in the predetermined space to the periphery of the flow sensor main body 24 (i.e. at central angle degree of 90°) .

Moreover, in the Embodiment of Fig. 8 (B), the flow sensor main body 24 is located to the center of the cross section of the flow sensor piping main body 12.

In addition, two bypass flow paths 62 having the substantially partial ring shape are located intervally in the predetermined space to the periphery of the flow sensor main body 24 (i.e. at central angle degree of 180°).

In the Embodiment of this Fig. 8 (B), along the cross section inner periphery of the flow sensor piping main body 12, two bypass flow paths 62 having the substantially partial ring shape are formed.

However, the disposing position from the cross section center of the flow sensor piping main body 12 of the bypass flow path 62 can be changed appropriately.

In this case, the bypass flow paths 62 having the substantially partial ring shape include two bypass flow paths 62.

However, this number may be 1 or more than 3 and the disposing central angle degree etc. can be set appropriately.

Moreover, in case that one bypass flow path 62 having substantially partial ring shape is disposed, like the Embodiment of Fig. 1-Fig. 7, though not show in the drawings, the flow sensor main body 24 is shifted and disposed from the cross section center of the flow sensor piping main body 12.

Moreover, it is also possible to locate the flow sensor main body 24 to the center of the cross section of the flow sensor piping main body 12.

In the Embodiment of this Fig. 8 (B), compared with the flow sensor 10 of the Embodiment of Fig. 1-Fig. 7, the outside diameter of the flow sensor piping main body 12 can be reduced even if sectional areas of passage of the bypass flow path 62 are the same, it is possible to make to a small diameter, and it can be assumed a compact design.

In addition, in Figure 8, as for the flow sensor main body 24, it is omitted for convenience' sake about the clarification.

The flow sensor 10 of the invention component like this is operated as follows.

First of all, a part of the fluid introduced from the entrance side piping portion 14 of the upstream side of the flow sensor piping main body 12, is entered in the flow sensor main body 24 located on the flow sensor main body accommodating portion 20 in the sensor accommodating portion 18 of the flow sensor piping main body 12.

Moreover, the fluid entered in the flow sensor main body 24 is passed through the vortex flow generating introducing path 40 of the vortex flow generating blade member 30, so that the vortex flow is generated.

Moreover, by the vortex flow generated like this, the flow measurement rotating blade member 32 is rotated.

In the flow rate detection portion 54, for instance, by hall IC etc., together with the rotation of the flow measurement rotating blade member 32, by change of flux density by magnetized tip of the blade portion 48, or by outputting the change of the field direction as a pulse signal, flowing quantity is measured.

In addition, the fluid which is passed through this flow measurement rotating blade member 32 is exhausted outside through a plurality of the outlet 34a of the outlet member 34 from the outlet side piping portion 16 of the flow sensor piping main body 12.

Specifically, as for the flow rate detection portion 54, the substrate 56 is provided as shown in Fig. 1 and Fig. 2, and the hall IC 58 is located on this substrate 56.

Moreover, together with the rotation of the flow measurement rotating blade member 32, the change in the field direction by the magnetized tip of the blade portion 48 is detected by the hall IC 58 and the pulse signal is generated.

That is, direct current normal rated voltage is applied to the hall IC 58 through the terminal 60.

As a result, the voltage of the frequency corresponding to the rotation number (flow rate) of the flow measurement rotating blade member 32 is output through the terminal 60.

Consequently, the flow rate of the fluid that flows in the flow sensor piping main body 12 is measured.

On the other hand, a part of the fluid that flows in the flow sensor piping main body 12 flows in the bypass flow path 62, which is formed on the sensor accommodating portion 18 of the flow sensor piping main body 12 in the direction of the fluid flow, besides the flow sensor main body accommodating portion 20.

As a result, the flow rate of the fluid flowing in the flow sensor main body 12 is reduced among the fluids which flow in the flow sensor piping main body 12.

Therefore, when the large amount of fluid is measured, the pressure loss becomes small compared with the conventional pressure sensor.

Moreover, in case that the flow rate is increased drastically, the heavy load is never applied to the flow sensor main body.

In addition, a flow sensor, in which the flow sensor main body 24 is never worn-out and damaged and in which accurate measurement of the flowmeter can be attained and a long product life is provided, can be provided.

Moreover, in case that the flow rate is increased drastically, the heavy load is never applied to the flow sensor main body 24.

Furthermore, the rotation number of the flow measurement rotating blade member 32 is not increased.

Therefore, the wear-out damage is not caused in the bearings 42 and 46 and the protrusion 46a of the flow measurement rotating blade member 32.

As a result, the flow sensor 10, in which accurate measurement of the flowmeter can be attained and a long product life is provided, can be provided.

Furthermore, it is applicable in various ranges of the use flow rate and flow characteristics according to changing the caliber and the shape of the bypass flow path 62.

In addition, parts of the conventional and existing flow sensor (the flow sensor unit 26) can be used as it is.

As a result, a flow sensor, in which the expense required for the design variation and the die, etc. can be reduced, and the cost can be reduced, can be provided.

### (Embodiment 2)

In the flow sensor 10 of the Embodiment shown in Fig. 1-Fig. 7, the outside diameter R1 of the sensor accommodating portion 18 of the flow sensor piping main body 12 is set to 45mm, and the inside diameter R2 of the flow sensor main body accommodating portion 20 is set to 15mm.

Then, the inside diameter R3 of the bypass flow path 62 is changed into 15mm, 12mm, 10mm, and 8mm.

In this connection, the relation between the flow rate of fluid which is flowed into the flow sensor piping main body 12, and the pulse (rotation number) detected in the flow sensor 10 of the invention, that is, measurement flow rate, is examined.

Moreover, about the flow sensor 10 of the Embodiment shown in Fig. 8 (B), that is, the Embodiment provided with two bypass flow paths 62 having the substantially partial ring shape which is corresponded to 12 mm of the inside diameter R3 of the above-mentioned bypass flow path 62, the relation between the flow rate of fluid which is flowed into the flow sensor piping main body 12, and the pulse (rotation number) detected in the flow sensor 10 of the invention, that is, measurement flow rate, is examined.

The result is shown in graph of Fig. 9.

As it is clear from the graph of Fig. 9, according to the flow sensor 10 of the invention, linear relations are obtained in every case.

In addition, by varying the cross-sectional shape, the size, the number, and the position and the disposition of the bypass flow path 62, it is understood to be able to provide the flow sensor 10 corresponding to directing range of the use flow rate and flow characteristic.

Although preferable embodiment of the invention is described above, the invention is not limited to this embodiment.

Moreover, in the above-mentioned Embodiment, as for the flow sensor main body 24, it comprises the flow sensor unit 26 including the vortex flow generating blade member 30, the flow measurement rotating blade member 32, and the outlet member 34.

However, it is also possible to apply to the flow sensor main body 24 having other component as for the flow sensor main body 24.

Therefore, various changes are possible in the scope in which it does not deviate from the object of the invention as defined by the appended claims.

### [Industrial Applicability]

The invention is applicable to a flow sensor to measure the flowing quantity of the fluid which is flowed in piping.

For instance, the invention is applicable to the flow sensor to measure the flowing quantity of the fluid of the liquid such as an instantaneous hot-water heater, a boiler, facilities of supplying hot water, and electric water heaters.

### [Explanation of Letters or Numerals]

10 Flow sensor
12 Flow sensor piping main body
14 Entrance side piping portion
14a Female screw
16 Outlet side piping portion
16a Female screw
18 Sensor accommodating portion
20 Flow sensor main body accommodating portion
22 Step portion
24 Flow sensor main body
26 Flow sensor unit
28 Casing
30 Vortex flow generating blade member
32 Flow measurement rotating blade member
34 Outlet member
34a Outlet
36 Entrance
38 Blade member
40 Vortex flow generating introducing path
42 Bearing
44 Shaft portion
44a Edge
44b Edge
46 Bearing
46a Protrusion
48 Blade portion
50 Securing ring
52 Recess
52a Threaded hole
54 Flow rate detection portion
56 Substrate
56a Screw
58 Hall IC
60 Terminal
62 Bypass flow path
100 Flow sensor
102 Flow sensor main body
102a Recess
102b Step portion
104 Entrance
106 Vortex flow generating blade member
108 Blade member
110 Vortex flow generating introducing path
112 Flow measurement rotating blade member
114 Bearing
116 Shaft portion
116a Edge
116b Edge
118 Outlet member
118a Outlet
120 Bearing
120a Protrusion
120b End surface
122 Flow rate detection portion
124 Casing
126 Flow sensor unit
128 Securing ring
130 Substrate
132 Hall IC
134 Terminal
136 Sealing resin
138 Lead wire
140 Blade portion
142 Retrieve housing
R1 Inside diameter
R2 Inside diameter
R3 Inside diameter
X Central line
Y Central line

## Claims

1. A flow sensor (10) for measuring the flow rate of a fluid, comprising:
a flow sensor piping main body (12) in which the fluid flows,
a flow sensor main body (24) which is located in the direction of the fluid flow, and
a bypass flow path (62) which is located in the flow sensor piping main body (12) in the direction of the fluid flow,
wherein the flow sensor main body (24) comprises
a flow sensor unit (26), the flow sensor unit (26) comprising
a fixed vortex flow generating blade member (30), which is located to the upstream side entrance of the fluid of the flow sensor main body (24), and with which the vortex flow is generated,
a flow measurement rotating blade member (32), which is located to the downstream of the vortex flow generating blade member (30), and which is rotated by the vortex flow generated by the vortex flow generating blade member (30),
a bearing (42) in which the shaft portion (44) of the flow measurement rotating blade member (32) is pivoted, wherein the flow sensor main body (24) further comprises
a flow rate detection portion (54) in which flow measurement is performed by rotating of the flow measurement rotating blade member (32)
**characterized in that**
the bypass flow path (62) and a flow sensor main body accommodating portion (20) are formed as through holes in the direction of the fluid flow inside a sensor accommodating portion (18) of the flow sensor piping main body and are separated from each other by an inner wall of the sensor accommodating portion (18); wherein the flow sensor unit (26) is located in the flow sensor main body accommodating portion (20).

2. The flow sensor described in Claim 1, wherein
the bypass flow path (62) comprises a plurality of the bypass flow paths (62).

3. The flow sensor described in Claim 2 wherein,
the flow sensor main body (24) is located to the center of the cross section of the flow sensor piping main body (12), and
the plurality of bypass flow paths (62) are located intervally in the predetermined space to the periphery of the flow sensor main body (24).

4. The flow sensor described in any one of Claims 1 to claim 3 wherein,
the bypass flow path (62) is the bypass flow path (62) having the substantially partial ring shape of the cross-sectional shape.

## Patentansprüche

1. Strömungssensor (10) zum Messen der Strömungsgeschwindigkeit eines Fluids, umfassend:
einen Strömungssensorrohrleitungshauptkörper (12), in dem das Fluid strömt,
einen Strömungssensorhauptkörper (24), der sich in der Richtung der Fluidströmung befindet, und
einen Umgehungsströmungsweg (62), der sich in dem Strömungssensorrohrleitungshauptkörper (12) in der Richtung der Fluidströmung befindet,
wobei der Strömungssensorhauptkörper (24) umfasst
eine Strömungssensoreinheit (26), wobei die Strömungssensoreinheit (26) umfasst
ein eine feste Vortexströmung erzeugendes Schaufelblattelement (30), das sich an dem strömungsaufwärtigen Seiteneingang des Fluids des Strömungssensorhauptkörpers (24) befindet und mit dem die Vortexströmung erzeugt wird,
ein rotierendes Strömungsmessungsschaufelblattelement (32), das sich strömungsabwärts des eine Vortexströmung erzeugenden Schaufelblattelements (30) befindet und das durch die durch das eine Vortexströmung erzeugende Schaufelblattelement (30) erzeugte Vortexströmung rotiert wird,
ein Lager (42), in dem der Wellenabschnitt (44) des rotierenden Strömungsmessungsschaufelblattelements (32) drehbar gelagert ist,
wobei der Strömungssensorhauptkörper (24) weiter umfasst
einen Strömungsgeschwindigkeitserfassungsabschnitt (54), in dem eine Strömungsmessung durch Rotieren des rotierenden Strömungsmessungsschaufelblattelements (32) durchgeführt wird,
**dadurch gekennzeichnet, dass**
der Umgehungsströmungsweg (62) und ein einen Strömungssensorhauptkörper aufnehmender Abschnitt (20) als Durchgangslöcher in der Richtung der Fluidströmung innerhalb eines einen Sensor aufnehmenden Abschnitts (18) des Strömungssensorrohrleitungshauptkörpers gebildet sind und voneinander durch eine Innenwand des einen Sensor aufnehmenden Abschnitts (18) getrennt sind; wobei sich die Strömungssensoreinheit (26) in dem einen Strömungssensorhauptkörper aufnehmenden Abschnitt (20) befindet.

2. Strömungssensor nach Anspruch 1, wobei
der Umgehungsströmungsweg (62) eine Vielzahl der Umgehungsströmungswege (62) umfasst.

3. Strömungssensor nach Anspruch 2, wobei
sich der Strömungssensorhauptkörper (24) in der Mitte des Querschnitts des Strömungssensorrohrleitungshauptkörpers (12) befindet und
sich die Vielzahl von Umgehungsströmungswegen (62) intervallweise in dem vorher festgelegten Abstand zum Umfang des Strömungssensorhauptkörpers (24) befinden.

4. Strömungssensor nach einem der Ansprüche 1 bis 3, wobei
der Umgehungsströmungsweg (62) der Umgehungsströmungsweg (62) mit der im Wesentlichen teilweisen Ringform der Querschnittsform ist.

## Revendications

1. Capteur de débit (10) destiné à mesurer le débit d'un fluide, comprenant :
un corps principal de tuyau de capteur de débit (12) dans lequel le fluide s'écoule,
un corps principal de capteur de débit (24) qui est situé dans la direction de l'écoulement du fluide, et
un chemin d'écoulement de dérivation (62) qui est situé dans le corps principal de tuyau de capteur de débit (12) dans la direction de l'écoulement du fluide,
dans lequel
le corps principal de capteur de débit (24) comprend
une unité de capteur de débit (26), l'unité de capteur de débit (26) comprenant
un élément de lame générant un tourbillon de sillage fixe (30), qui est situé vers l'entrée côté amont du fluide du corps principal de capteur de débit (24), et avec lequel le tourbillon de sillage est généré,
un élément de lame rotative de mesure de débit (32), qui est situé vers l'aval de l'élément de lame générant un tourbillon de sillage (30), et qui est mis en rotation par l'intermédiaire du tourbillon de sillage généré par l'élément de lame générant un tourbillon de sillage (30),
un palier (42) dans lequel la portion de tige (44) de l'élément de lame rotative de mesure de débit (32) est mise en rotation, dans lequel le corps principal de capteur de débit (24) comprend en outre
une portion de détection de débit (54) dans laquelle la mesure de l'écoulement est réalisée en mettant en rotation l'élément de lame rotative de mesure de débit (32)
**caractérisé en ce que**
le chemin d'écoulement de dérivation (62) et une portion de logement de corps principal de capteur de débit (20) sont formés en tant que trous traversants dans la direction de l'écoulement de fluide à l'intérieur d'une portion de logement de capteur (18) du corps principal de tuyau de capteur de débit et sont séparés l'un de l'autre par une paroi interne de la portion de logement de capteur (18) ; dans lequel l'unité de capteur de débit (26) est située dans la portion de logement de corps principal de capteur de débit (20).

2. Capteur de débit selon la revendication 1, dans lequel
le chemin d'écoulement de dérivation (62) comprend une pluralité des chemins d'écoulement de dérivation (62).

3. Capteur de débit selon la revendication 2, dans lequel,
le corps principal de capteur de débit (24) est situé vers le centre de la section transversale du corps principal de tuyau de capteur de débit (12), et
la pluralité de chemins d'écoulement de dérivation (62) sont situés à intervalle dans l'espace prédéterminé à la périphérie du corps principal de capteur de débit (24).

4. Capteur de débit selon l'une quelconque des revendications 1 à revendication 3 dans lequel,
le chemin d'écoulement de dérivation (62) est le chemin d'écoulement de dérivation (62) présentant la forme annulaire sensiblement partielle de la forme en coupe transversale.
